# EUROPEAN PATENT APPLICATION

(11) **EP 4 506 101 A1**
(43) Date of publication of application: **12.02.2025**
(21) Application number: 23933283.6
(22) Date of filing: 19.06.2023
(51) Int. Cl.: B23Q 15/14, B23Q 17/22, B23Q 11/00, G05B 19/05, G05B 19/414, H02J 9/00

(54) **ENERGY SAVING DEVICE FOR MULTI-SYSTEM MULTI-TASKING MACHINE TOOL**

(71) Applicant: DN Solutions Co., Ltd., Changwon-si, Gyeongsangnam-do 51537 (KR)
(72) Inventor: CHA, Hyeoncheol, Gimhae-si, Gyeongsangnam-do 50858 (KR)
(74) Representative: BCKIP Part mbB
(86) International application number: PCT/KR2023/008425
(87) International publication number: WO 2024/262659

(57) **Abstract**

An apparatus for realizing energy savings of a multi-axis system complex machine tool includes a CNC control device 10 configured to constitute a plurality of processing condition groups that are a set of at least one axis units depending on whether the axis units can be used simultaneously without conflicts between the axis units and to transmit a processing condition group signal by recognizing a specific processing condition group; and a power supply device 20 including a plurality of driver modules that drive an axis unit corresponding to the at least one processing condition group signal, and a plurality of relays to apply a standby power to the driver module that drives the axis unit being used for a machining work, while blocking the standby power to the unused axis unit, thereby reducing power consumption in the multi-axis system complex machine.

## Description

### [Technical Field]

The present disclosure relates to electrical energy savings used in machine tools, and more specifically, to an apparatus and a method for realizing energy savings by blocking a standby power of an axis unit that is not being used for machining in a multi-axis system complex machine tool.

### [Background Art]

In general, a multi-axis system complex machine tool is provided with at least two axis units that rotate or transport a tool or a workpiece and performs various machining works such as milling, turning, and grinding process in a single machine tool by setting up the workpiece once. To perform such a complex (multi-tasking) processing, a computer numerically controlled (CNC) device to control the axis units is provided. Since the CNC device applied to a complex machine tool has many axis units subject to control, a CNC device having a concept of integrating multiple numerical control devices is applied.

The CNC device of the multi-axis system complex machine tool is comprised of an axis unit that independently performs machining programs and a group consisting of a set of such axis units. In other words, a single axis system means that it performs a single machining program (G-Code) through an operation control of one or more axis units, and a multi-axis system means that a plurality of axis units is provided and one or more machining programs are simultaneously performed to process the workpiece.

Therefore, in the multi-axis system complex machine tool, the workpiece and processing information should be shared between respective axis systems, and multi-axis systems should be operated simultaneously in multi-tasking ways to execute a complex (multi-tasking) machining work.

As such, the multi-axis system complex machine tool consists of several axis units that perform rotation or transport functions, and respective axis systems comprised of a plurality of axis units are driven and controlled by an independently provided power source.

However, in such a conventional multi-axis system complex machine tool, each system operates simultaneously and complexly to process the workpiece, but there should inevitably exist an axis unit not participating in the complex processing work to avoid conflicts in machining operations by respective axis units or due to a nature of the machining programs in consideration of an order of machining operations, or the like. Nevertheless, when the multi-axis system complex machine tool starts its operation, a standby power is always supplied to a driving part of each axis unit in preparation for a prompt operation at any time.

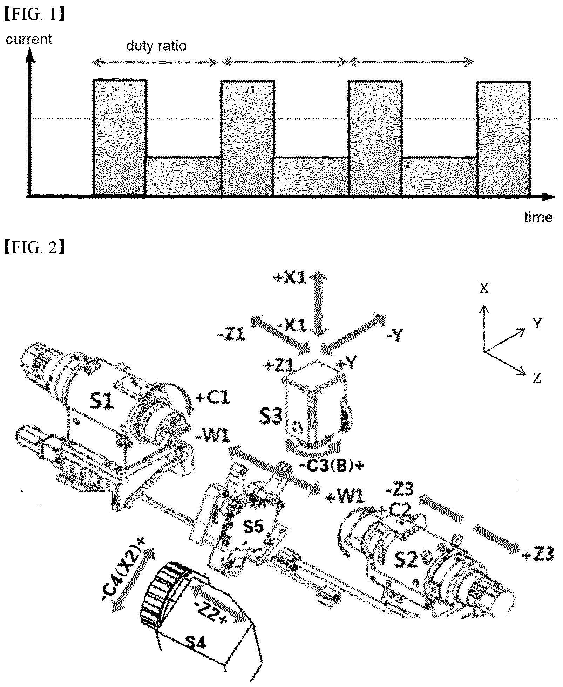

Therefore, as exemplarily shown in FIG. 1, such a standby power contributes to power consumption by maintaining a constant current value even if a corresponding axis unit is not operated.

Patent Document 1 relates to an energy saving type numerical control device that minimizes a power consumption of the machine tool by controlling an acceleration and a deceleration speed of the transporting axis and an acceleration and a deceleration speed of the spindle. Patent Document 1 discloses a machining program part that transmits at least one command out of a position, a speed and an acceleration and a deceleration speed for driving a main spindle motor and a transporting motor in response to a processing cycle, and introduces a method of reducing the power consumption by calculating and controlling time constants of the respective commands included in each processing cycle in cooperation with the machining program part.

However, this method only uses one of a friction torque of the main spindle, a load inertia and parameters of the main spindle motor to control the time constant that determines a target speed reaching time of a transporting axis unit or a rotation axis unit, which is nothing more than a solution for reducing the power consumption in part only during acceleration and deceleration process of the axis unit.

### [Cited References]

### [Patent Documents]

(Patent Document 1) Korean Patent Registration No. 10-1575144

### [Disclosure of Invention]

### [Technical Problem]

To resolve the problems discussed above, an object of the present disclosure is to provide an apparatus and a method for realizing energy savings by distinguishing an axis unit being used for a machining work and an unused axis unit in a multi-axis system complex machine tool and not supplying a standby power to a driver module that controls the unused axis unit, thereby reducing power consumption of the multi-axis system complex machine tool.

### [Technical Solution]

To achieve the objects discussed above, an apparatus for realizing energy savings of a multi-axis system complex machine tool according to an exemplary embodiment of the present disclosure may include: a CNC control device 10, when executing a complex processing a workpiece, configured to constitute a plurality of processing condition groups that are a set of at least one axis units depending on whether the axis units can be used simultaneously without conflicts between the axis units according to processing conditions of the workpiece, recognize a specific processing condition group out of the plurality of processing condition groups in response to execution of the machining program, and transmit a processing condition group signal; and a power supply device 20 including a driver module unit 40 having a plurality of driver modules that drive an axis unit corresponding to the at least one processing condition group signal, and a relay unit 30 having a plurality of relays installed in numbers corresponding to the plurality of driver modules and to apply a standby power to the driver module that drives the axis unit of the processing condition group in response to the processing condition group signal.

In a preferred embodiment, the axis unit may comprise:
a main spindle (S 1) installed in a Z-axis direction, wherein the main spindle (S 1) includes a main spindle rotation axis unit (C1) that rotates about a rotation axis in the Z-axis direction;
a milling spindle (S3) installed in a direction perpendicular to a rotation axis of the main spindle rotation axis system (C1), wherein the milling spindle (S3), as a feed axis unit, includes a milling spindle X-axis unit (X1) that moves the milling spindle (S3) in a X-axis direction, a milling spindle Y-axis unit (Y1) that moves the milling spindle (S3) in a Y-axis direction, and a milling spindle Z-axis unit (Z 1) that moves the milling spindle (S3) in a Z-axis direction, and wherein the milling spindle (S3), as a rotation axis unit, includes a milling spindle rotation axis unit (C3) that rotates the milling spindle (S3) about a rotation axis in the X-axis direction;
a sub-spindle (S2) installed at a position opposite to the main spindle (S1) in the Z-axis direction, wherein the sub-spindle (S2) includes a sub-spindle rotation axis unit (C2) that rotates about a rotation axis in the Z-axis direction and as a feed axis unit, a sub-spindle feed axis unit (C3) that moves the sub-spindle (S2) in the Z-axis direction; and
a tool post (S4) installed in a direction perpendicular to the rotation axes of the main spindle (S 1) and the sub-spindle (S2), wherein the tool post (S4), as a feed axis unit, includes a tool post X-axis unit (X2) that moves the tool post (S4) in the direction perpendicular to the rotation axes of the main spindle (S 1) and the sub-spindle (S2) and a tool post Z-axis unit (Z2) that moves the tool post (S4) in the Z-axis direction.

In a preferred embodiment, the milling spindle rotation axis unit (C3) may further include a milling division axis unit (B) that performs an angle division rotation function.

In a preferred embodiment, the tool post (S4) may further include a tool post rotation axis unit (C4), as a rotation axis unit, that rotates a rotary tool mounted on the tool post (S4).

In a preferred embodiment, an anti-vibration unit (S5) may be installed between the main spindle (S 1) and the sub-spindle (S2), wherein the anti-vibration unit (S5), as a feed unit, includes an anti-vibration axis unit (W1) that moves the anti-vibration unit in the Z-axis direction.

In a preferred embodiment, the processing condition group of the CNC control device 10 may include at least one or more groups out of:
a first condition group that uses all of the feed axis units (X1, Y1, Z1, Z3, X2, Z2) of a first axis system and a second axis system and rotation axis units (C1, C2, C3, C4);
a second condition group that uses all of the feed axis units (X1, Y1, Z1) of the first axis system and rotation axis units (C1, C3), and uses only the sub-spindle rotation axis unit (C2) of the sub-spindle (S2) in the second axis system;
a third condition group that uses all of the feed axis units (Z3, X2, Z2) of the second axis system and rotation axis units (C2, C4), and uses only the milling spindle rotation axis unit (C3) of the milling spindle (S3) in the first axis system;
a fourth condition group that uses all of the feed axis units (X1, Y1, Z 1) of the first axis system and rotation axis units (C1, C3), and uses only the tool post X-axis unit (X2) of the tool post (S4) in the second axis system;
a fifth condition group that uses only the feed axis units (X1, Y1, Z1) of the first axis system and rotation axis units (C1, C3); and
a sixth condition group that uses only the feed axis units (Z3, X2, Z2) of the second axis system and rotation axis units (C2, C4).

In a preferred embodiment, the CNC control device 10 may include a machining program unit 11 that controls respective axis units to execute a machining work of the workpiece, a programmable logic controller (PLC) 12 that recognizes a processing condition group including the axis unit to be used by analyzing a machining program of the machining program unit 11, and an I/O module 13 that outputs a relay drive signal of the power supply device 20 according to the processing condition group signal provided from the PLC control unit 12.

In a preferred embodiment, the machining program unit 11 may be configured to derive an M code included in the machining program and applies an axis unit signal to be used according to the M code to the PLC control unit 12.

In a preferred embodiment, the machining program unit 11 may be configured to apply signals contained in the machining program on the rotation axis units (C1, C2, C3, C4) of the spindles (S1, S2, S3) and the tool post(S4) to be used to the PLC control unit 12, wherein the PLC control unit 12 is configured to identify the processing condition group including the signals of the rotation axis units (C1, C2, C3, C4) and apply the same to the I/O module.

In a preferred embodiment, each relay of the relay unit 30 may be a B-contact type relay whose contact is released in response to the processing condition group signal applied from the CNC control device 10, wherein when the relay is in an A contact, a standby power is blocked to the axis unit driver module of the corresponding processing condition group, and when the relay is in a B contact, the standby power is supplied to the axis unit driver module of the relevant processing condition group.

In a preferred embodiment, the relay unit 30 may comprise:
a first relay (31) connected to the first driver module 41 that supplies or blocks the standby power to the main spindle rotation axis unit (C1) which is a rotation axis unit, and the milling spindle X-axis unit (X1), the milling spindle Y-axis unit (Y1), and the milling spindle Z-axis system (Z1) which are feed axis units;
a second relay (32) connected to the second driver module 42 that supplies or blocks the standby power to the sub-spindle rotation axis unit (C2) which is a rotation axis unit;
a third relay (33) connected to the third driver module 43 that supplies or blocks the standby power to the tool post axis unit (C4) which is a rotation axis unit;
a fourth relay (34) connected to the fourth driver module 44 that supplies or blocks the standby power to the tool post X-axis unit (X2), the tool post Z-axis unit (Z2) and the sub-spindle feed axis unit (Z3) which are feed axis units; and
a fifth relay (35) connected to the fifth driver module 45 that supplies or blocks the standby power to the milling spindle rotation unit (C3) which is a rotation axis unit.

In a preferred embodiment, the relay unit 30 may further includes a sixth relay 36 connected to the sixth driver module 46 that supplies or blocks the standby power to an arm axis unit of a tool changer, a shift axis unit of the tool changer, an axis unit of a first tool magazine axis system, and an axis unit of a second tool magazine of the multi-axis system complex machine tool.

### [Advantageous Effects]

The present disclosure may reduce power consumption by distinguishing between an axis unit being used for a machining work and an unused axis unit in a multi-axis system complex machine tool and by not supplying a standby power to a driver module that controls the unused axis unit.

### [Description of Drawings]

FIG. 1 is a schematic diagram illustrating a standby power distribution of a driver module of a multi-axis system complex machine tool in the related art.
FIG. 2 is a schematic conceptual diagram configuring an axis unit for an axis system of a multi-axis system complex machine tool according to an exemplary embodiment of the present disclosure.
FIG. 3 is a table illustrating a classification of an axis system of a multi-axis system complex machine tool and a complex processing condition group for respective axis systems according to an exemplary embodiment of the present disclosure.
FIG. 4 is a diagram illustrating a configuration of a driver module for each axis system of a multi-axis system complex machine tool according to an exemplary embodiment of the present disclosure.
FIG. 5 is an exemplary machining program that applies a standby power to at a driver module of an axis unit through a machining program according to an exemplary embodiment of the present disclosure.
FIG. 6 is a table illustrating an axis unit allocated for respective relays and driver modules according to an exemplary embodiment of the present disclosure.
FIG. 7 is a table illustrating a rely and a driver module that are blocked for respective condition groups and a complex processing condition according to an exemplary embodiment of the present disclosure.

### [Best mode for embodiment of Invention]

The following description is merely exemplary in nature and is not intended to limit the present disclosure, application, or uses. It should be understood that throughout the drawings, corresponding reference numerals indicate like or corresponding units and features.

Hereinafter, exemplary embodiments of the present disclosure are described in detail with reference to FIGS. 2 to 7.

In the present disclosure, an axis unit collectively refers to a rotation axis unit and a feed axis unit, unless specifically limited. Each axis unit may include a servomotor that is controlled by commands from a numerical control device or a computerized numerical control (CNC) device 10 of a multi-axis complex machine tool. The servomotor may serve to rotate or feed a relevant axis unit by high-speed rotation or angle division. In addition, each servomotor constituting each axis unit may be provided with a driver module that receives power from a power supply device 20 and controls rotation of the servomotor. Each driver module may be controlled by a command of the numerical control device or the CNC control device 10.

In addition, the present disclosure exemplarily illustrates a multi-axis system complex machine tool including a plurality of rotation axis units and feed axis units. However, not all the multi-axis system complex machine tools are necessarily equipped with such rotation axis units and feed axis units. Depending on a type of the multi-axis system complex machine tool, it may be configured by omitting or adding some rotation axis units and feed axis units.

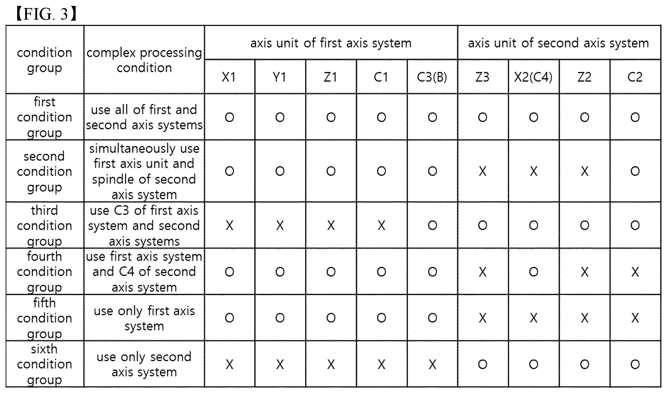

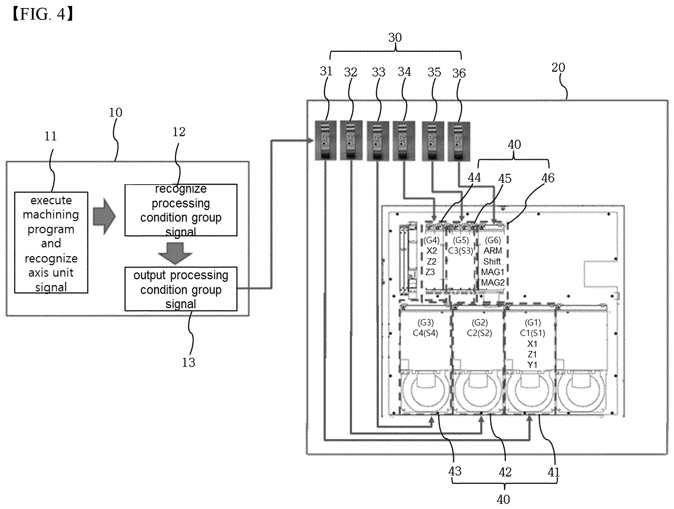

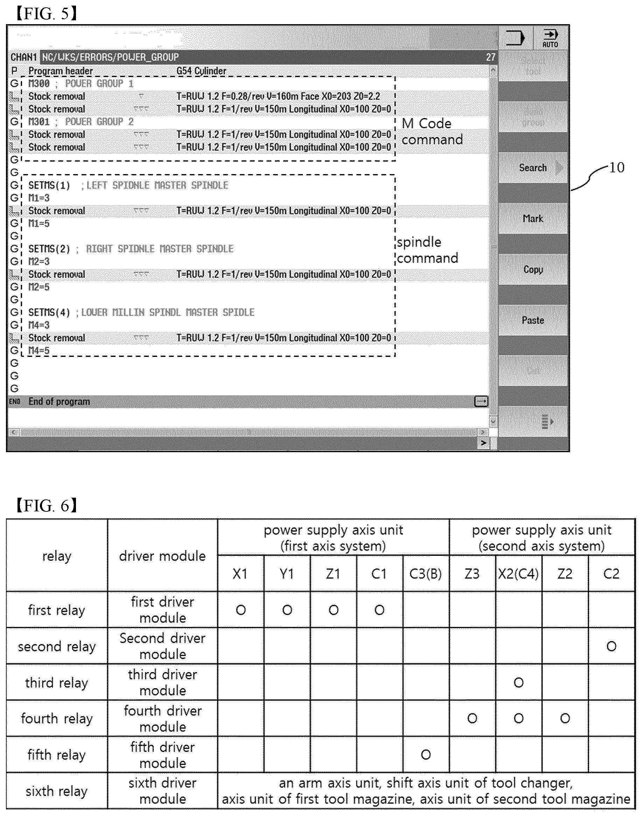

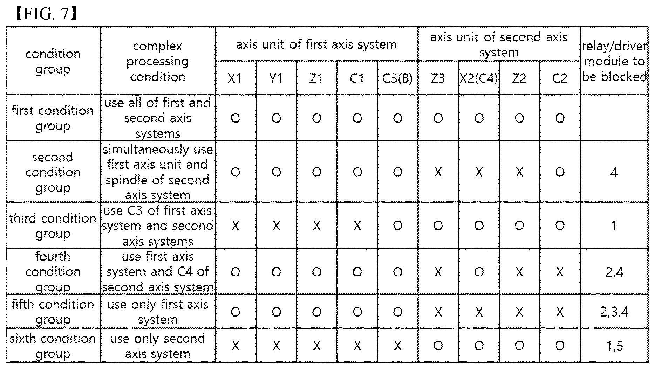

FIG. 2 is a schematic conceptual diagram configuring an axis unit for an axis system of a multi-axis system complex machine tool according to an exemplary embodiment of the present disclosure. FIG. 3 is a table illustrating a classification of an axis system of a multi-axis system complex machine tool and a complex processing condition group for each axis system according to an exemplary embodiment of the present disclosure. FIG. 4 is a diagram illustrating a configuration of a driver module for each axis system of a multi-axis system complex machine tool according to an exemplary embodiment of the present disclosure. FIG. 5 is an exemplary machining program that applies power to at a driver module of an axis unit through a machining program according to an exemplary embodiment of the present disclosure. FIG. 6 is a table illustrating an axis unit allocated for each relay and each driver module according to an exemplary embodiment of the present disclosure. FIG. 7 is a table illustrating a rely and a driver module that are blocked for each condition group and a complex processing condition according to an exemplary embodiment of the present disclosure.

Referring to FIG. 2, a multi-axis system complex machine tool according to an exemplary embodiment of the present disclosure may be comprised of following axis units.

Firstly, a first axis system may include a main spindle (S1) installed in the multi-axis system complex machine tool in a Z-axis direction, wherein the main spindle (S1) includes a main spindle rotation axis unit (C1) that rotates about a rotation axis in the Z-axis direction.

The first axis system may include a milling spindle (S3) installed in a direction perpendicular to a rotation axis of the main spindle rotation axis system (C1), wherein the milling spindle (S3), as a feed axis unit, includes a milling spindle X-axis unit (X1) that moves the milling spindle (S3) in a X-axis direction, a milling spindle Y-axis unit (Y1) that moves the milling spindle (S3) in a Y-axis direction, and a milling spindle Z-axis unit (Z1) that moves the milling spindle (S3) in a Z-axis direction, and wherein the milling spindle (S3), as a rotation axis unit, includes a milling spindle rotation axis unit (C3) that rotates the milling spindle (S3) about a rotation axis in the X-axis direction.

The milling spindle rotation axis unit (C3) may include a milling division axis unit (B) that performs an angle division rotation function according to a type of the multi-axis system complex machine tool.

A second axis system may include a sub-spindle (S2) installed at a position opposite to the main spindle (S 1) in the multi-axis system complex machine tool in the Z-axis direction, wherein the sub-spindle (S2) includes a sub-spindle rotation axis unit (C2) that rotates about a rotation axis in the Z-axis direction and as a feed axis unit, a sub-spindle feed axis unit (C3) that moves the sub-spindle (S2) in the Z-axis direction.

In addition, the second axis system may include a tool post (S4) installed in a direction perpendicular to the rotation axes of the main spindle (S 1) and the sub-spindle (S2), wherein the tool post (S4), as a feed axis unit, includes a tool post X-axis unit (X2) that moves the tool post (S4) in the direction perpendicular to the rotation axes of the main spindle (S 1) and the sub-spindle (S2) and a tool post Z-axis unit (Z2) that moves the tool post (S4) in the Z-axis direction.

The tool post (S4) may further include a tool post rotation axis unit (C4), as a rotation axis unit, that rotates a rotary tool mounted on the tool post (S4) according to a type of the multi-axis system complex machine tool.

Further, the second axis system may include an anti-vibration unit (S5) installed between the main spindle (S 1) and the sub-spindle (S2), wherein the anti-vibration unit (S5), as a feed ais unit, includes an anti-vibration axis unit (W1) that moves the anti-vibration unit in the Z-axis direction.

Here, the anti-vibration axis unit (W1) may be a feed axis unit that may be excluded depending on whether the anti-vibration unit (S5) is installed or not, since the installation of the anti-vibration unit (S5) may be omitted depending on the type of multi-axis system complex machine tool.

As shown in FIG. 3, the above-mentioned axis unit processing may be divided into a plurality of processing condition groups that consists of at least one axis unit depending on whether or not the axis unit may be simultaneously used while avoiding collisions between axis units depending on the processing conditions of the workpiece when executing a complex machining of the workpiece. In this embodiment, the axis unit may be divided into six processing condition groups as follows.

A first condition group may be a complex processing condition that uses all of the feed axis units (X1, Y1, Z1, Z3, X2, Z2) of a first axis system and a second axis system and rotation axis units (C1, C2, C3, C4). In other words, the first condition group refers to a working condition that processes a workpiece by simultaneously or selectively using the main spindle (S 1), the sub-spindle (S2), the milling spindle (S3), and the tool post (S4) of a multi-axis system complex machine tool.

A second condition group may be a complex processing condition that uses all of the feed axis units (X1, Y1, Z1) of the first axis system and rotation axis units (C1, C3), and uses only the sub-spindle rotation axis unit (C2) of the sub-spindle (S2) in the second axis system. In other words, the second condition group refers to a working condition that processes a workpiece by simultaneously or selectively using the main spindle (S1), the sub-spindle (S2) and the milling spindle (S3) of a multi-axis system complex machine tool.

A third condition group may be a complex processing condition that uses all of the feed axis units (Z3, X2, Z2) of the second axis system and rotation axis units (C2, C4), and uses only the milling spindle rotation axis unit (C3) of the milling spindle (S3) in the first axis system. In other words, the third condition group refers to a working condition that processes a workpiece by simultaneously or selectively using the sub-spindle (S2), the milling spindle (S3) and the tool post (S4) of a multi-axis system complex machine tool.

A fourth condition group may be a complex processing condition that uses all of the feed axis units (X1, Y1, Z1) of the first axis system and rotation axis units (C1, C3), and uses only the tool post X-axis unit (X2), a feed axis unit, of the tool post (S4) in the second axis system. In other words, the second condition group refers to a working condition that processes a workpiece by simultaneously or selectively using the main spindle (S 1), the milling spindle (S3) and the tool post (S4) of a multi-axis system complex machine tool.

A fifth condition group may be a complex processing condition that uses only the feed axis units (X1, Y1, Z1) of the first axis system and rotation axis units (C1, C3). In other words, the fifth condition group refers to a working condition that processes a workpiece by simultaneously or selectively using the main spindle (S1) and the milling spindle (S3) of the multi-axis system complex machine tool.

A sixth condition group may be a complex processing condition that uses only the feed axis units (Z3, X2, Z2) of the second axis system and rotation axis units (C2, C4). In other words, the sixth condition group refers to a working condition that processes a workpiece by simultaneously or selectively using the sub-spindle (S2) and the tool post (S4) of a multi-axis system complex machine tool.

Referring to FIG. 4, the multi-axis system complex machine tool according to an exemplary embodiment of the present disclosure may include a CNC control device 10 that recognizes the processing condition group in response to execution of the machining program and provides a processing condition group signal, and a power supply device 20 including a plurality of driver modules that drive an axis unit corresponding to the at least one processing condition group signal, and a plurality of relays installed in numbers corresponding to the plurality of driver modules and to apply a standby power to the driver module that drives the axis unit of the processing condition group in response to the processing condition group signal.

The relay of the power supply device 20 may be configured to supply the standby power only to the driver module for driving the axis unit of the processing condition group in response to the processing condition group signal which is provided from the CNC control device 10, and to block the standby power to the driver module for driving the axis system of the processing condition which is not provided with the processing condition group signal from the CNC control device 10.

Specifically, the CNC control device 10 may include a machining program unit 11 that controls respective axis units of the first and second axis systems to execute a machining work of the workpiece, a programmable logic controller (PLC) 12 that recognizes a processing condition group including the axis unit to be used by analyzing a machining program of the machining program unit 11, and an I/O module 13 that outputs a relay drive signal of the power supply device 20 to operate the driver module of the axis unit of the processing condition group to be used according to the processing condition group signal provided from the PLC control unit 12.

The power supply device 20 may include a relay unit 30 having a plurality of relays that is operated by receiving at least one processing condition group signal from the I/O module 13 of the CNC control device 10, and a driver module unit 40 including a plurality of driver modules that are connected correspondingly to the relay unit 30 and supply the standby power to the axis system of the processing condition group applied to the relay unit 30 in response to the processing condition group signal.

Each relay of the relay unit 30, which is connected to the driver module unit 40, may be a B-contact type relay whose contact is released in response to the processing condition group signal of the axis unit to be use that is applied from the I/O module 13, wherein when the relay is in an A contact state (i.e., a contact is formed), the standby power may be blocked to the axis unit driver module of the corresponding processing condition group, and when the relay is in a B contact state (i.e., a contact is not formed), the standby power may be supplied to the axis unit driver module of the relevant processing condition group.

Meanwhile, when the machining program is executed in the machining program unit 11, the CNC control device (10) may energize all relays in the relay unit (30) at the same time as the machining program starts so that the standby power is applied to all driver modules (41 to 46) driven by each relay, thereby enabling the use of all axis unit.

Referring to FIG. 5, when the machining program starts, the PLC control unit (12) may detect the axis unit to be used and the axis unit not to be used from the machining program unit (11). That is, when the axis unit to be used is detected through the machining program and the machining program to process the workpiece is executed in the machining program unit (11), the machining program unit (11) may derive an M code included in the machining program and apply a signal of the axis unit to be used to the PLC control unit (12) according to the M code. The PLC control unit (12) may identify and apply the processing condition group to the I/O module (13) of the CNC control device (10). The I/O module (13) may energize the relay of the power supply device (20) corresponding to the condition group to maintain the B contact state and energize the relay of the power supply device (20) not corresponding to the condition group to form the A contact state.

Meanwhile, in another embodiment, as shown in FIG. 5, when the machining program is started, the PLC control unit (12) may detect a rotational axis unit to be used in the machining program unit (11). In other words, when the rotational axis unit to be used is detected through the machining program and the machining program is executed to process the workpiece in the machining program unit (11), the machining program unit (11) may apply rotational axis (C1, C2, C3, C4) signals of the spindles (S1, S2, S3, S4) to be used, which are included in the machining program, to the PLC control unit (12). The PLC control unit (12) may identify a complex processing condition group (condition group") including the rotational axis (C1, C2, C3, C4) signals and applies such signals to the I/O module (13) of the CNC control device (10). The above I/O module (13) may maintain the relay of the power supply device (20) corresponding to the condition group in a B contact state, while energizing the relay of the power supply device (20) not corresponding to the condition group to form a contact (A contact state).

When use of one M-code or use of the spindle is terminated during execution of the machining program, all relays (31 to 36) of the relay unit (30) may be maintained in the B contact state until use of another M-code or use of a different spindle is recognized, and then the standby power may be applied to all driver modules (41 to 46) of the driver module unit (40). However, since the time of executing another M-code for next processing after execution of one M-code in a continuous complex machining process is very short, it is noted that the power consumption is not so much even if the standby power is applied to all driver modules (41 to 46) momentarily during this process, which does not reach a level to hinder energy saving effects of the present disclosure.

Meantime, as shown in FIGS. 6 and 7, all the relay according an exemplary embodiment of the present disclosure may be in a B contact state. The first relay (31) may be connected to the first driver module 41 that supplies or blocks the standby power to the main spindle rotation axis unit (C1) which is a rotation axis unit, and the milling spindle X-axis unit (X1), the milling spindle Y-axis unit (Y1), and the milling spindle Z-axis system (Z1) which are feed axis units.

The second relay (32) may be connected to the second driver module 42 that supplies or blocks the standby power to the sub-spindle rotation axis unit (C2) which is a rotation axis unit.

The third relay (33) may be connected to the third driver module 43 that supplies or blocks the standby power to the tool post axis unit (C4) which is a rotation axis unit.

The fourth relay (34) may be connected to the fourth driver module 44 that supplies or blocks the standby power to the tool post X-axis unit (X2), the tool post Z-axis unit (Z2) and the sub-spindle feed axis unit (Z3) which are feed axis units.

The fifth relay (35) may be connected to the fifth driver module 45 that supplies or blocks the standby power to the milling spindle rotation unit (C3) which is a rotation axis unit.

The sixth relay 36 may be connected to the sixth driver module 46 that supplies or blocks the standby power to an arm axis unit (not shown) of a tool changer, a shift axis unit (not shown) of the tool changer, an axis unit (not shown) of a first tool magazine axis system, and an axis unit (not shown) of a second tool magazine of the multi-axis system complex machine tool.

Here, all the relay according an exemplary embodiment of the present disclosure may be in a B contact state. Referring to FIG. 3, when a condition group signal of the axis unit to be used that is applied from the I/O module 13 to the relay unit 30 is a first condition group signal that uses all of the axis units of the first axis system and the second axis system, all the relays (31 to 36) of the relay unit (30) may not be operated and maintained in the B contact state, such that the standby power of 24 Volts is applied to all driver modules (41 to 46) connected to all of the relays (31 to 36).

When a condition group signal of the axis unit to be used that is applied from the I/O module 13 to the relay unit 30 is a second condition group signal that simultaneously uses the spindles of the first axis system and the second axis system, a contact may be formed in the fourth relay (34), such that the standby power is blocked to the fourth driver modules (44) that is connected to the fourth relay (34) to operate the feed axis units (Z3, X2, Z2), while the standby power of 24 Volts is applied to remaining driver modules.

When a condition group signal of the axis unit to be used that is applied from the I/O module 13 to the relay unit 30 is a third condition group signal that uses the milling spindle rotation axis unit (C3) of the first axis system and all axis units of the second axis system, a contact may be formed in the first relay (31), such that the standby power is blocked to the first driver modules (41) that is connected to the first relay (31) to operate the axis units (X1, Y1, Z1 and C1), while the standby power of 24 Volts is applied to remaining driver modules.

When a condition group signal of the axis unit to be used that is applied from the I/O module 13 to the relay unit 30 is a fourth condition group signal that uses all of the axis units of the first axis system and only the tool post rotation axis unit (C4) of the second axis system, contacts may be formed in the second and fourth relays (32, 34), such that the standby power is blocked to both the second driver modules (42) that is connected to the second relay (32) and the fourth driver modules (44) that is connected to the fourth relay (34) to operate the axis units (Z3, Z2 and C2), while the standby power of 24 Volts is applied to remaining driver modules.

When a condition group signal of the axis unit to be used that is applied from the I/O module 13 to the relay unit 30 is a fifth condition group signal that uses all of the axis units of the first axis system, contacts may be formed in the second to fourth relays (32, 33, 34), such that the standby power is blocked to the second to fourth driver modules (42, 43, 44) that are connected to the second to fourth relays (32, 33, 34), respectively, to operate the axis units (X2, Z2, Z3, C2 and C4) of the second axis system, while the standby power of 24 Volts is applied to remaining driver modules.

When a condition group signal of the axis unit to be used that is applied from the I/O module 13 to the relay unit 30 is a sixth condition group signal that uses all of the axis units of the second axis system, contacts may be formed in the first and fifth relays (31, 35), such that the standby power is blocked to the first and fifth driver modules (41, 45) that are connected to the first and fifth relays (31, 35), respectively, to operate the axis units (X1, Z1, Y1, C1, and C3) of the first axis system, while the standby power of 24 Volts is applied to remaining driver modules.

Meanwhile, the sixth relay (36) and the sixth driver module (46) may be configured to apply or block the standby power to the tool changer (not shown) and the axis units related to the first and second tool magazines. When there is a tool exchange command in the processing program unit, the sixth relay 36 is maintained in the B contact through the PLC control unit 12 and the I/O module 13, so that the standby power is applied to the arm axis unit (not shown) of the tool exchange device, the shift axis unit (not shown) of the tool exchange device, the first tool magazine axis unit (not shown), and the second tool magazine axis unit (not shown). in contrast, when there is not a tool exchange command in the processing program unit, the sixth relay 36 is maintained in the A contact, so that the standby power is blocked to the arm axis unit (not shown) of the tool exchange device, the shift axis unit (not shown) of the tool exchange device, the first tool magazine axis unit (not shown), and the second tool magazine axis unit (not shown).

When use of one M-code or use of the spindle is terminated during execution of the machining program, all relays (31 to 36) of the relay unit (30) may be maintained in the B contact state until use of another M-code or use of a different spindle is recognized, and then the standby power may be applied to all driver modules (41 to 46) of the driver module unit (40). Meantime, since the time of executing another M-code for next processing after execution of one M-code in a continuous complex machining process is very short, it is noted that the power consumption is not so much even if the standby power is applied to all driver modules (41 to 46) momentarily during this process, which does not reach a level to hinder energy saving effects of the present disclosure.

Meanwhile, in another exemplary embodiment of the present disclosure, the relay unit 30 may be formed in an A contact state. In this case, the corresponding driver modules operated by each relay may be applied with the standby power of 24 Volts when the relay is in the A contact state, while blocking the standby power when the relay is in the B contact state to implement the operations in the same way as the embodiments of the B contact state.

In addition, although above exemplary embodiments have been described a multi-axis system complex machine tool equipped with two axis systems and a plurality of axis units as an example, a person having ordinary skill in the art can modify these embodiments in which a multi-axis system complex machine tool may be configured by excluding some axis units or adding axis units, grouping the axis units based on the complex machining possibility of each axis unit and allocating each driver module thereto, detecting by each driver module whether the corresponding axis unit is being used through the machining program of the CNC control device (10), and apply the power to the driver module of the axis unit being used but blocking the power supply to the driver module of the axis unit not being used, thereby implementing the invention described in the claims.

Accordingly, the present invention may prevent energy waste due to the standby power by distinguishing the axis unit that is not being used through interpretation of the machining program in the CNC control device (10) as described above, and then blocking the supply of the standby power to the driver module of the axis unit not being used.

### [Explanation of Signs]

10: CNC control device
11: machining program unit
12: PLC control unit
13: I/O module
20: power supply device
31: first relay
32: second
33: third relay
34: fourth relay
35: fifth relay
36: sixth relay
40: driver module unit
41: first driver module
42: second driver module
43: third driver module
44: fourth driver module
45: fifth driver module
46: sixth driver module

## Claims

1. An apparatus for realizing energy savings of a multi-axis system complex machine tool, the apparatus comprising:
a CNC control device 10, when executing a complex processing a workpiece, configured to constitute a plurality of processing condition groups that are a set of at least one axis units depending on whether the axis units can be used simultaneously without conflicts between the axis units according to processing conditions of the workpiece, recognize a specific processing condition group out of the plurality of processing condition groups in response to execution of the machining program, and transmit a processing condition group signal; and
a power supply device 20 including a driver module unit 40 having a plurality of driver modules that drive an axis unit corresponding to the at least one processing condition group signal, and a relay unit 30 having a plurality of relays installed in numbers corresponding to the plurality of driver modules and to apply a standby power to the driver module that drives the axis unit of the processing condition group in response to the processing condition group signal.

2. The apparatus of claim 1, wherein the axis unit comprises:
a main spindle (S1) installed in a Z-axis direction, wherein the main spindle (S1) includes a main spindle rotation axis unit (C1) that rotates about a rotation axis in the Z-axis direction;
a milling spindle (S3) installed in a direction perpendicular to a rotation axis of the main spindle rotation axis system (C1), wherein the milling spindle (S3), as a feed axis unit, includes a milling spindle X-axis unit (X1) that moves the milling spindle (S3) in a X-axis direction, a milling spindle Y-axis unit (Y1) that moves the milling spindle (S3) in a Y-axis direction, and a milling spindle Z-axis unit (Z1) that moves the milling spindle (S3) in a Z-axis direction, and wherein the milling spindle (S3), as a rotation axis unit, includes a milling spindle rotation axis unit (C3) that rotates the milling spindle (S3) about a rotation axis in the X-axis direction;
a sub-spindle (S2) installed at a position opposite to the main spindle (S1) in the Z-axis direction, wherein the sub-spindle (S2) includes a sub-spindle rotation axis unit (C2) that rotates about a rotation axis in the Z-axis direction and as a feed axis unit, a sub-spindle feed axis unit (C3) that moves the sub-spindle (S2) in the Z-axis direction; and
a tool post (S4) installed in a direction perpendicular to the rotation axes of the main spindle (S1) and the sub-spindle (S2), wherein the tool post (S4), as a feed axis unit, includes a tool post X-axis unit (X2) that moves the tool post (S4) in the direction perpendicular to the rotation axes of the main spindle (S1) and the sub-spindle (S2) and a tool post Z-axis unit (Z2) that moves the tool post (S4) in the Z-axis direction.

3. The apparatus of claim 2, wherein the milling spindle rotation axis unit (C3) further includes a milling division axis unit (B) that performs an angle division rotation function.

4. The apparatus of claim 2, wherein the tool post (S4) further includes a tool post rotation axis unit (C4), as a rotation axis unit, that rotates a rotary tool mounted on the tool post (S4).

5. The apparatus of claim 2, further comprising an anti-vibration unit (S5) installed between the main spindle (S1) and the sub-spindle (S2), wherein the anti-vibration unit (S5), as a feed unit, includes an anti-vibration axis unit (W1) that moves the anti-vibration unit in the Z-axis direction.

6. The apparatus of claim 1, wherein the processing condition group of the CNC control device 10 includes at least one or more groups out of:
a first condition group that uses all of the feed axis units (X1, Y1, Z1, Z3, X2, Z2) of a first axis system and a second axis system and rotation axis units (C1, C2, C3, C4);
a second condition group that uses all of the feed axis units (X1, Y1, Z1) of the first axis system and rotation axis units (C1, C3), and uses only the sub-spindle rotation axis unit (C2) of the sub-spindle (S2) in the second axis system;
a third condition group that uses all of the feed axis units (Z3, X2, Z2) of the second axis system and rotation axis units (C2, C4), and uses only the milling spindle rotation axis unit (C3) of the milling spindle (S3) in the first axis system;
a fourth condition group that uses all of the feed axis units (X1, Y1, Z1) of the first axis system and rotation axis units (C1, C3), and uses only the tool post X-axis unit (X2) of the tool post (S4) in the second axis system;
a fifth condition group that uses only the feed axis units (X1, Y1, Z1) of the first axis system and rotation axis units (C1, C3); and
a sixth condition group that uses only the feed axis units (Z3, X2, Z2) of the second axis system and rotation axis units (C2, C4).

7. The apparatus of claim 1, wherein the CNC control device 10 comprising:
a machining program unit 11 that controls respective axis units to execute a machining work of the workpiece,
a programmable logic controller (PLC) 12 that recognizes a processing condition group including the axis unit to be used by analyzing a machining program of the machining program unit 11, and
an I/O module 13 that outputs a relay drive signal of the power supply device 20 according to the processing condition group signal provided from the PLC control unit 12.

8. The apparatus of claim 7, wherein the machining program unit 11 is configured to derive an M code included in the machining program and applies an axis unit signal to be used according to the M code to the PLC control unit 12.

9. The apparatus of claim 7, wherein the machining program unit 11 is configured to apply signals contained in the machining program on the rotation axis units (C1, C2, C3, C4) of the spindles (S1, S2, S3) and the tool post(S4) to be used to the PLC control unit 12, wherein the PLC control unit 12 is configured to identify the processing condition group including the signals of the rotation axis units (C1, C2, C3, C4) and apply the same to the I/O module.

10. The apparatus of claim 1, wherein each relay of the relay unit 30 is a B-contact type relay whose contact is released in response to the processing condition group signal applied from the CNC control device 10, wherein when the relay is in an A contact, the standby power is blocked to the axis unit driver module of the corresponding processing condition group, and when the relay is in a B contact, the standby power is supplied to the axis unit driver module of the relevant processing condition group.

11. The apparatus of claim 10, wherein the relay unit 30 comprises:
a first relay (31) connected to the first driver module 41 that supplies or blocks the standby power to the main spindle rotation axis unit (C1) which is a rotation axis unit, and the milling spindle X-axis unit (X1), the milling spindle Y-axis unit (Y1), and the milling spindle Z-axis system (Z1) which are feed axis units;
a second relay (32) connected to the second driver module 42 that supplies or blocks the standby power to the sub-spindle rotation axis unit (C2) which is a rotation axis unit;
a third relay (33) connected to the third driver module 43 that supplies or blocks the standby power to the tool post axis unit (C4) which is a rotation axis unit;
a fourth relay (34) connected to the fourth driver module 44 that supplies or blocks the standby power to the tool post X-axis unit (X2), the tool post Z-axis unit (Z2) and the sub-spindle feed axis unit (Z3) which are feed axis units; and
a fifth relay (35) connected to the fifth driver module 45 that supplies or blocks the standby power to the milling spindle rotation unit (C3) which is a rotation axis unit.

12. The apparatus of claim 11, wherein the relay unit 30 further includes a sixth relay 36 connected to the sixth driver module 46 that supplies or blocks the standby power to an arm axis unit of a tool changer, a shift axis unit of the tool changer, an axis unit of a first tool magazine axis system, and an axis unit of a second tool magazine of the multi-axis system complex machine tool.
